# EUROPÄISCHE PATENTSCHRIFT

(11) **EP 2 909 779 B1**
(45) Veröffentlichungstag und Bekanntmachung des Hinweises auf die Patenterteilung: **04.12.2019**
(21) Anmeldenummer: 13774658.2
(22) Anmeldetag: 09.10.2013
(51) Int. Cl.: G06F 21/34

(54) **VERFAHREN ZUR ERZEUGUNG EINES ONE-TIME-PASSWORD (OTP)**
METHOD FOR GENERATING A ONE-TIME-PASSWORD (OTP)
PROCÉDÉ DE CRÉATION D'UN MOT DE PASSE À USAGE UNIQUE

(30) Priorität: 17.10.2012 DE 102012218944
(43) Veröffentlichungstag der Anmeldung: 26.08.2015
(73) Patentinhaber: Bundesdruckerei GmbH, 10969 Berlin (DE)
(72) Erfinder: BASTIAN, Paul, 10243 Berlin (DE); DIETRICH, Frank, 12437 Berlin (DE); KRAUS, Micha, 10827 Berlin (DE); MORGNER, Frank, 12055 Berlin (DE); SCHRÖDER, Martin, 12437 Berlin (DE)
(74) Vertreter: Richardt Patentanwälte PartG mbB
(86) Internationale Anmeldenummer: PCT/EP2013/071064
(87) Internationale Veröffentlichungsnummer: WO 2014/060266

(56) Entgegenhaltungen:
- EP-A1- 1 862 948
- WO-A1-2010/043974
- DE-A1-102009 027 686
- US-A1- 2005 015 588
- M'RAIHI VERISIGN M BELLARE UCSD F HOORNAERT VASCO D NACCACHE GEMPLUS O RANEN ALADDIN D: "HOTP: An HMAC-Based One-Time Password Algorithm; rfc4226.txt", HOTP: AN HMAC-BASED ONE-TIME PASSWORD ALGORITHM; RFC4226.TXT, INTERNET ENGINEERING TASK FORCE, IETF; STANDARD, INTERNET SOCIETY (ISOC) 4, RUE DES FALAISES CH- 1205 GENEVA, SWITZERLAND, 1 December 2005 (2005-12-01), XP015054903,

## Beschreibung

Die Erfindung betrifft ein Verfahren zur Erzeugung eines OTP, einen Sicherheitstoken sowie ein Computersystem.

Aus dem Stand der Technik sind Sicherheitstoken bekannt, die über eine gemeinsame Zeitbasis mit einem Authentisierungsserver verfügen, um synchron zu dem Authentisierungsserver ständig wechselnde Passwörter zu generieren. Ein Nachteil solcher Sicherheitstoken ist, dass diese eine Batterie benötigen, um die gemeinsame Zeitbasis mit dem Authentisierungsserver zur Verfügung zu stellen.

WO 2010/043974 A1 beschreibt ein System, das eine Transaktionseinheit umfasst, die einen Mikrochip mit einem computerlesbaren Medium enthält, das konfiguriert ist, eine Einheitskennung und mindestens ein Einmalpasswort darin zu speichern. Die UI und das mindestens eine OTP umfassen Transaktionsauthentifizierungsdaten. Die Transaktionseinheit ist konfiguriert, die Transaktionsauthentifizierungsdaten als Antwort auf das Empfangen eines vorbestimmten Signals zu senden. Eine Lesevorrichtung ist konfiguriert, das vorbestimmte Signal zu senden, um die Transaktionseinheit abzufragen und die Transaktionsauthentifizierungsdaten zu lesen. Die Lesevorrichtung ist konfiguriert, mindestens eine Authentifizierungsangabe als Antwort auf den Empfang eines Authentifizierungssignals zu erzeugen. Ein Server ist mit dem Lesegerät verbunden. Der Server umfasst eine Datenbank mit mindestens einem Server-OTP, das mit mindestens einer darin gespeicherten Einheitenkennung verknüpft ist, wobei das mindestens eine Server-OTP und die mindestens eine Einheitenkennung Transaktionsverifizierungsdaten umfassen. Der Server ist konfiguriert, die Transaktionsauthentifizierungsdaten mit den Transaktionsverifizierungsdaten zu vergleichen. Der Server ist auch konfiguriert, um das Authentifizierungssignal an die Leservorrichtung zu senden, wenn die Transaktionsauthentifizierungsdaten mit den Transaktionsverifizierungsdaten übereinstimmen.

US 2005/015588 A1 beschreibt ein Token-Gerät, das Einmalpasswörter erzeugt und anzeigt und an einen Computer zum Eingeben oder Empfangen von Daten zum Erzeugen und Ausgeben von Einmalpasswörtern und zum Ausführen anderer Funktionen angeschlossen ist. Das Token umfasst eine Schnittstelle zum Ankoppeln an einen Computer. Das Token kann auch mit einem Netzwerk verbunden sein, mit dem der Computer verbunden sein kann. Daten und Informationen können zwischen dem Computer und dem Token und zwischen dem Netzwerk und dem Token über den Computer und die Schnittstelle übertragen werden. Die Daten und Informationen können Einmalpasswort-Seeding, Dateitransfer, Authentifizierung, Konfiguration und Programmierung des Tokens umfassen. Das Token muss zum Erzeugen und Anzeigen von Einmalpasswörtern mit einem Seed versehen werden. Ein Original- oder Seed-Wert wird in das Token geladen. Einmalpasswörter werden anschließend aus dem Seed-Wert erzeugt oder berechnet.

DE 10 2009 027686 A1 beschreibt ein Verfahren zum Lesen zumindest eines in einem ID-Token gespeicherten Attributs, wobei der ID-Token einem Nutzer zugeordnet ist, mit folgenden Schritten: Authentifizierung des Nutzers gegenüber dem ID-Token, Authentifizierung eines ersten Computersystems gegenüber dem ID-Token, nach erfolgreicher Authentifizierung des Nutzers und des ersten Computersystems gegenüber dem ID-Token, Übertragung einer Zeitangabe von dem ersten Computersystem an den ID-Token zur Generierung eines Passworts mit Hilfe der Zeitangabe durch den ID-Token, Lesezugriff des ersten Computersystems auf das zumindest eine in dem ID-Token gespeicherte Attribut zur Übertragung des zumindest einen Attributs nach dessen Signierung an ein zweites Computersystem.

EP 1 862 948 A1 beschreibt ein OTP-Token, welches aus einer IC-Karte besteht, insbesondere einer eine SIM-Karte emulierenden Smartcard, und eine OTP-Anwendung umfasst. Die IC-Karte stützt sich auf ein Kommunikationsgerät, beispielsweise ein normales Mobiltelefon, welches das von der IC-Karte erzeugte OTP anzeigt.

M'RAIHI D. et al.: "HOTP: An HMAC-Based One-Time Password Algorithm", RFC 42256, INTERNET ENGINEERING TASK FORCE (IETF) THE INTERNET SOCIETY, Dezember 2005, beschreibt einen Algorithmus zum Erzeugen von Einmalpasswortwerten basierend auf einem Hashed Message Authentication Code (HMAC). Eine Sicherheitsanalyse des Algorithmus wird beschrieben und Parameter im Zusammenhang mit einer sicheren Bereitstellung des Algorithmus werden diskutiert. Der vorgeschlagene Algorithmus kann für eine breite Palette von Netzwerkanwendungen verwendet werden, die von einem Remote Virtual Private Network (VPN) -Zugriffen über eine WI-FI-Netzwerkanmeldung bis hin zu transaktionsorientierten Webanwendungen reicht.

Demgegenüber liegt der Erfindung die Aufgabe zugrunde, ein verbessertes Verfahren zur Erzeugung eines OTP, einen Sicherheitstoken sowie ein Computersystem zu schaffen.

Die der Erfindung zugrunde liegenden Aufgaben werden jeweils mit den Merkmalen der unabhängigen Patentansprüche gelöst. Ausführungsformen der Erfindung sind in den abhängigen Ansprüchen angegeben.

Unter einem "One-Time-Password" oder "OTP" wird hier ein Einmal-Passwort oder ein Einmal-Kennwort verstanden, welches nur für eine einmalige Verwendung gültig sein soll. Entsprechend erfordert jede Authentisierung ein neues OTP.

Unter einem "Sicherheitstoken" oder "Security Token" wird hier eine Vorrichtung verstanden, die an autorisierte Nutzer für die Zwecke der Authentisierung herausgegeben werden. Solche Sicherheitstoken werden auch als Hardwaretoken, Authentication Token oder Cryptographic Token bezeichnet.

Insbesondere kann es sich bei einem erfindungsgemäßen Sicherheitstoken um einen USB-Stick, eine Chipkarte oder ein Wert- oder Sicherheitsdokument handeln.

Unter einem "Wert- oder Sicherheitsdokument" wird dabei insbesondere ein Ausweisdokument, das heißt ein ID-Dokument, insbesondere ein elektronischen Personalausweis, Reisepass, Führerschein, Firmenausweis oder ein Zahlungsmittel, wie zum Beispiel eine Banknote, eine Kreditkarte oder einen sonstigen Berechtigungsnachweis, wie zum Beispiel eine Eintrittskarte, einen Frachtbrief oder ein Visum, insbesondere eine Chipkarte, insbesondere mit RFID- und/oder NFC-Schnittstelle, verstanden.

Vorzugsweise hat der Sicherheitstoken eine drahtlose Schnittstelle zur Einkopplung elektrischer Energie von einem Terminal, wobei die drahtlose Schnittstelle gleichzeitig auch zur Kommunikation mit dem Terminal dienen kann, wie zum Beispiel nach einem NFC- und/oder RFID-Verfahren. Der Sicherheitstoken wird also nur so lange mit elektrischer Energie versorgt, wie er sich in der Reichweite des Terminals befindet.

Unter einem "Terminal" wird hier ein elektronisches Gerät verstanden, welches eine Schnittstelle zur Einkopplung von elektrischer Energie in den Sicherheitstoken aufweist sowie zum Senden eines Kommandos zur Erzeugung des OTP an das Sicherheitstoken, wie zum Beispiel ein Chipkartenterminal, ein NFC- oder RFID-Lesegerät oder ein mobiles Telekommunikationsgerät, wie zum Beispiel ein sogenanntes Smartphone mit integrierter NFC- und/oder RFID-Schnittstelle.

Nach Ausführungsformen der Erfindung wird zur Authentisierung eines Nutzers gegenüber einem Authentisierungsserver wie folgt vorgegangen:
Zunächst bringt der Nutzer den Sicherheitstoken in die Reichweite des Terminals, das heißt zum Beispiel eines Smartphones des Nutzers, welches eine NFC-Schnittstelle aufweist. Durch die von dem Terminal abgestrahlte Trägerwelle wird elektrische Energie in den Sicherheitstoken eingekoppelt, sodass dieser hierdurch aktiviert wird. Beispielsweise beginnt hierdurch ein Oszillator des Sicherheitstokens zu schwingen, sodass der Prozessor des Sicherheitstokens getaktet wird und die Ausführung eines Programms des Sicherheitstokens starten kann.

Der Benutzer kann beispielsweise in ein Anwendungsprogramm des Terminals eingeben, dass von dem Sicherheitstoken ein OTP generiert werden soll, um dem Nutzer die Authentisierung gegenüber einem Authentisierungsserver zu ermöglichen. Das Anwendungsprogramm des Terminals generiert daraufhin eine entsprechende Anforderung für ein OTP, welche als Kommando von dem Terminal an den Sicherheitstoken gesendet wird, wie zum Beispiel als sogenannte Kommando-APDU oder in Form von mehreren APDUs.

Aufgrund des Empfangs des Kommandos von dem Terminal erzeugt der Sicherheitstoken ein OTP durch kryptografische Ableitung, wobei in diese kryptografische Ableitung erste und zweite Daten eingehen, die in einem elektronischen Speicher des Sicherheitstokens gespeichert sind, und zwar in Speicherbereichen, auf die nur der Prozessor des Tokens einen Speicherzugriff durchführen kann. Beispielsweise geben die ersten Daten einen aktuellen Zustand an, wohingegen die zweiten Daten ein unveränderliches Geheimnis sein können.

Das so abgeleitete OTP wird dann auf eine Anzeigevorrichtung, das heißt einem Display, des Sicherheitstokens angezeigt, sodass es der Nutzer von dem Display ablesen kann.

Ferner werden durch den Sicherheitstoken aktualisierte erste Daten ermittelt, und zwar mithilfe einer Funktion. Bei dieser Funktion kann es sich zum Beispiel um einen Zähler oder einen deterministischen Zufallszahlengenerator zur Erzeugung von Pseudozufallszahlen handeln.

Die in dem elektronischen Speicher gespeicherten ersten Daten werden dann durch die aktualisierten ersten Daten überschrieben, wobei die zweiten Daten unverändert bleiben.

Zwischen einem Nutzer-Computersystem und einem Authentisierungsserver wird nun eine Netzwerkverbindung hergestellt.

Unter einem "Nutzer-Computersystem" wird dabei ein Computersystem, wie zum Beispiel ein PC, verstanden, der sich nutzerseitig befindet. Die Netzwerkverbindung zu dem Authentisierungsserver kann über ein öffentliches Netzwerk, wie zum Beispiel das Internet, aufgebaut werden.

Unter einem "Authentisierungsserver" wird hier ein Computer verstanden, der zur Authentisierung des Nutzers dient, um im Falle einer erfolgreichen Authentisierung ein Authentisierungssignal zu generieren, welches dem Nutzer zum Beispiel die Inanspruchnahme eines Dienstes ermöglicht.

Zur Herstellung der Netzwerkverbindung gibt der Nutzer beispielsweise eine URL in den Internetbrowser seines Nutzer-Computersystems ein. In die hierdurch aufgerufene Webseite gibt der Nutzer dann in den Internet-Browser seines Nutzer-Computersystem das auf der Anzeigevorrichtung des Sicherheitstokens angezeigte OTP sowie einen Identifikator ein.

Unter einem "Identifikator" wird hier eine Information verstanden, die den Nutzer und/oder den Sicherheitstoken eindeutig identifiziert, wie zum Beispiel eine Username-Passwort-Kombination, eine E-Mail-Adresse des Nutzers und/oder eine Kennung des Sicherheitstokens selbst, wie zum Beispiel eine Kartennummer.

Der Identifikator und das OTP werden über die Netzwerkverbindung von dem Nutzer-Computersystem an den Authentisierungsserver übertragen. Der Authentisierungsserver greift daraufhin auf eine Datenbank zu, um mithilfe des Identifikators eine Version der ersten und zweiten Daten aus der Datenbank auszulesen.

Der Authentisierungsserver führt dann dieselbe kryptografische Ableitung durch, die zuvor der Sicherheitstoken mithilfe der ersten und zweiten Daten durchgeführt hat. Wenn die aus der Datenbank ausgelesene Version der ersten und zweiten Daten mit den seitens des Sicherheitstokens verwendeten ersten und zweiten Daten übereinstimmt, so führt dies zwangsläufig dazu, dass der Authentisierungsserver hierdurch dasselbe OTP generiert, wie es auch der Sicherheitstoken zuvor generiert hat.

Die anschließende Prüfung, ob das über die Netzwerkverbindung empfangene OTP mit dem weiteren von dem Authentisierungsserver generierten OTP übereinstimmt, muss dann positiv ausfallen, sodass der Authentisierungsserver dann ein Authentisierungssignal generiert, welches die erfolgreiche Authentisierung signalisiert, um hierdurch beispielsweise eine Nutzung eines Dienstes durch den Nutzer freizugeben.

Der Authentisierungsserver ermittelt ferner die aktualisierten ersten Daten auf dieselbe Art und Weise, wie dies auch seitens des Sicherheitstokens erfolgt, und speichert die aktualisierten ersten Daten in der Datenbank, sodass die in dem Sicherheitstoken gespeicherten ersten Daten mit der in der Datenbank gespeicherten Version der ersten Daten übereinstimmt.

Nach einer Ausführungsform der Erfindung werden die bei Einkopplung von elektrischer Energie in den Sicherheitstoken in dem elektronischen Speicher gespeicherten ersten Daten für die kryptografische Ableitung des OTP verwendet. Anschließend werden diese ersten Daten aktualisiert und die aktualisierten ersten Daten werden in dem elektronischen Speicher gespeichert, um die vorherige Version der ersten Daten zu ersetzen. Entsprechend wird dann auch seitens des Authentisierungsservers verfahren, der die aus der Datenbank ausgelesene Version der ersten Daten für die kryptografische Ableitung des weiteren OTP verwendet und erst anschließend die Aktualisierung der ersten Daten vornimmt, um diese aktualisierten ersten Daten in der Datenbank zum Ersatz der vorherigen Version der ersten Daten zu speichern.

Alternativ ist es aber auch möglich, dass die in dem elektronischen Speicher des Sicherheitstokens initial bei der Einkopplung von elektrischer Energie gespeicherten ersten Daten zunächst durch den Sicherheitstoken aktualisiert werden, um dann mit den aktualisierten ersten Daten die kryptografische Ableitung des OTP vorzunehmen. Entsprechend kann seitens des Authentisierungsservers vorgegangen werden, der die aus der Datenbank ausgelesene Version der ersten Daten zuerst aktualisiert, um dann mithilfe der aktualisierten ersten Daten das weitere OTP abzuleiten.

Ferner ist es auch möglich, dass zunächst das OTP von dem Sicherheitstoken angezeigt wird und anschließend die Aktualisierung der ersten Daten und/oder deren Speicherung in dem elektronischen Speicher zur Ersetzung der vorhergehenden Version der ersten Daten vorgenommen wird oder dass zunächst die Aktualisierung der ersten Daten und optional auch deren Speicherung in dem elektronischen Speicher vor der Anzeige des OTP auf der Anzeigevorrichtung des Sicherheitstokens vorgenommen wird.

Nach einer Ausführungsform der Erfindung hat der Sicherheitstoken einen Zähler, der mit jeder kryptografischen Ableitung eines OTP inkrementiert oder dekrementiert wird, um die ersten Daten zu aktualisieren. Beispielsweise handelt es sich bei dem aktuellen Wert des Zählers um die ersten Daten. Diese ersten Daten können unmittelbar Eingang in die kryptografische Ableitung des OTP finden. Alternativ wird aus den ersten Daten zunächst ein weiterer Wert abgeleitet, welcher dann für die kryptografische Ableitung des OTP dient.

Der Authentisierungsserver hat bei dieser Ausführungsform einen Zähler mit identischer Funktionalität, wie der Zähler des Sicherheitstokens, um so die jeweils aktuelle Version der ersten Daten zu erhalten und in der Datenbank zu speichern.

Nach einer weiteren Ausführungsform der Erfindung beinhaltet der Sicherheitstoken einen deterministischen Zufallszahlengenerator, der zur Erzeugung einer Folge von N Zufallszahlen ausgebildet ist, wobei die ersten Daten das i-te Glied der Folge bestimmen. Ein solcher deterministischer Zufallszahlengenerator kann durch eine Hardwareschaltung gebildet werden, wie zum Beispiel ein rückgekoppeltes Schieberegister, wobei die ersten Daten in diesem Fall die in den Registern gespeicherten Datenwerte sind, welche eine bestimmte Zufallszahl am Ausgang des Zufallszahlengenerators zur Folge haben.

Alternativ kann der deterministische Zufallszahlengenerator auch als ein Programm implementiert sein, welches von dem Prozessor des Sicherheitstokens ausgeführt wird; in diesem Fall handelt es sich bei den ersten Daten um die aktuellen Werte von Programmvariablen, die die Ausgabe einer bestimmten Zufallszahl durch das Programm zur Folge haben.

Zu jedem Zustand des Zufallszahlengenerators, das heißt zu jeder von dem Zufallszahlengenerator ausgegebenen Zufallszahl, korrespondieren also entsprechende erste Daten, die diesen Zustand des Zufallsgenerators festlegen und eben diese Zufallszahl am Ausgang bzw. als Ausgabewert des Zufallszahlengenerators zur Folge haben. Eine solche Zufallszahl wird dann von dem Sicherheitstoken für die kryptografische Ableitung des OTP verwendet.

Entsprechend wird auch seitens des Authentisierungsservers vorgegangen, der einen identischen deterministischen Zufallszahlengenerator aufweist, dessen Zustand, und damit dessen erste Daten, sich mit jeder weiteren Erzeugung einer Zufallszahl ändert, wodurch die ersten Daten aktualisiert werden.

Nach einer Ausführungsform der Erfindung erfolgt die kryptografische Ableitung des OTP durch eine Keyed-Hash-Funktion.

Unter einer "Keyed-Hash-Funktion" wird hier insbesondere eine kryptografische Funktion verstanden, die aus einem Eingangswert einen Hashwert berechnet, der dann mithilfe eines geheimen Schlüssels verschlüsselt wird, vergleiche hierzu auch "Keyed-Hash-Functions", S. Bakhtiari et al., Center for Computer Security Research, Department of Computer Science, University of Wollongong, Australia.

Beispielsweise können unmittelbar die ersten Daten als Eingangswert für die Keyed-Hash-Funktion verwendet werden, sodass also ein Hashwert aus den ersten Daten berechnet wird. Die zweiten Daten sind dann das Geheimnis des Nutzers, welche als geheimer Schlüssel zur Verschlüsselung des aus den ersten Daten erhaltenen Hashwerts dienen. Hieraus resultiert dann das OTP.

Alternativ wird ein aus den ersten Daten abgeleiteter oder durch die ersten Daten bestimmter Wert als Eingangswert in die Keyed-Hash-Funktion verwendet, das heißt im Falle eines Zählers ein aus dem aktuellen Zählerwert abgeleiteter Wert oder im Falle eines deterministischen Zufallszahlengenerators die durch die ersten Daten bestimmte Zufallszahl.

Dieser Wert wird dann gehasht und mithilfe der zweiten Daten verschlüsselt, um das OTP zu erhalten. In gleicher Art und Weise wird auch seitens des Authentisierungsservers vorgegangen, um das weitere OTP zu erzeugen, um es mit dem von dem Nutzer-Computersystem empfangenen OTP zu vergleichen.

Ausführungsformen der Erfindung sind besonders vorteilhaft, da der Sicherheitstoken keine eigene Energieversorgung benötigt, sodass die langfristige Funktion des Sicherheitstokens über mehrere Jahre hinweg sichergestellt werden kann. Dies ist besonders vorteilhaft für die Ausführung des Sicherheitstoken als Chipkarte, insbesondere als Wert- oder Sicherheitsdokument. Ein weiterer besonderer Vorteil ist, dass zwischen dem Terminal und dem Authentisierungsserver keine Verbindung aufgebaut werden muss, was den Implementierungsaufwand der Erfindung reduziert und gleichzeitig eine zusätzliche Sicherheit, zum Beispiel gegen eine sogenannte "man in the middle-Attacke" schafft.

Ausführungsformen der Erfindung sind von besonderem Vorteil, da auf zumeist ohnehin vorhandene Hardware zurückgegriffen werden kann, um die Erfindung nutzerseitig zu implementieren, nämlich auf ein Smartphone mit z.B. einer NFC Schnittstelle zur Realisierung des Terminals und einen üblichen PC zur Realisierung des Nutzer-Computersystems. Weitere Hardwarekomponenten, wie zum Beispiel ein Chipkarten-Lesegerät, müssen dann von dem Nutzer nicht angeschafft werden.

Nach einer Ausführungsform der Erfindung werden die folgenden weiteren Schritte von dem Authentisierungsserver durchgeführt, wenn seitens des Authentisierungsservers keine Übereinstimmung mit dem von dem Nutzer-Computersystem empfangenen OTP und mit dem weiteren, von dem Authentisierungsserver generierten OTP festgestellt werden kann:
a) Die ersten Daten werden aktualisiert, das heißt je nach Ausführungsform durch Inkrementierung oder Dekrementierung des Zählers oder durch die Erzeugung einer weiteren Zufallszahl der Folge von Zufallszahlen.
b) Auf der Basis dieser aktualisierten ersten Daten wird dann erneut ein OTP durch den Authentisierungsserver kryptografisch abgeleitet.
c) Das von dem Nutzer-Computersystem empfangene OTP wird erneut verglichen, und zwar mit dem zuvor erneut von dem Authentisierungsserver auf der Basis der aktualisierten ersten Daten erzeugten weiteren OTP.

Diese Schritte a) bis c) werden dann so lange wiederholt, bis entweder eine Übereinstimmung der OTPs in dem Schritt c) gefunden wurde oder eine Abbruchbedingung erreicht worden ist. Als Abbruchbedingung kann beispielsweise eine maximale Anzahl von Wiederholungen der Schritte a) bis c) festgelegt werden, wie zum Beispiel 5, 10, 15 oder 20 Wiederholungen.

Beispielsweise kann es vorkommen, dass ein Nutzer zwar die Erzeugung eines OTP durch den Sicherheitstoken anfordert, das daraufhin in dem Sicherheitstoken angezeigte OTP aber nicht in seinem Nutzer-Computersystem eingibt, weil er bei seiner Tätigkeit unterbrochen wurde oder eine bestimmte Transaktion doch nicht durchführen möchte. Eine andere Möglichkeit ist, dass der Nutzer einen Fehler bei der manuellen Eingabe des OTP macht.

Dies hat dann aber zur Folge, dass eine Aktualisierung der ersten Daten nur durch den Sicherheitstoken erfolgt, nicht aber aufseiten des Authentisierungsservers, sodass die in der Datenbank des Authentisierungsservers gespeicherte Version der ersten Daten nicht mehr mit der aktuellen Version der ersten Daten übereinstimmt, die in dem Sicherheitstoken gespeichert ist. In dieser Situation ermöglicht die einmalige oder erforderlichenfalls mehrmalige Durchführung der oben genannten Schritte a) bis c) dennoch eine Authentisierung und einen damit einhergehenden Abgleich der in der Datenbank gespeicherten Version der ersten Daten mit der in dem Sicherheitstoken gespeicherten Version der ersten Daten, sodass diese wieder übereinstimmen.

In einem weiteren Aspekt betrifft die Erfindung einen Sicherheitstoken mit
- Mitteln zur Einkopplung von elektrischer Energie zur Energieversorgung des Sicherheitstokens durch ein Terminal,
- Mitteln zum Empfangen eines Kommandos zur Erzeugung des OTP von dem Terminal,
- Mitteln zur kryptografischen Ableitung des OTP mithilfe von in einem elektronischen Speicher des Sicherheitstokens gespeicherten ersten und zweiten Daten,
- Mitteln zur Anzeige des OTP auf einer Anzeigevorrichtung des Sicherheitstokens,
- Mitteln zur Ermittlung von aktualisierten ersten Daten mithilfe einer Funktion, wobei vor der kryptografischen Ableitung des OTP eine Aktualisierung der ersten Daten erfolgt, und
- Mitteln zur Ersetzung der ersten Daten durch die aktualisierten ersten Daten in dem elektronischen Speicher des Sicherheitstokens.

In einem weiteren Aspekt betrifft die Erfindung ein Dienst-Computersystem mit Mitteln zur Erbringung eines Dienstes, für welchen eine Authentisierung erforderlich ist. Bei dem Dienst kann es sich zum Beispiel um einen Log-in auf einer Webseite handeln, um auf bestimmte Inhalte zugreifen zu können, einen Virtual Private Network (VPN)-Server, einen E-Mail-Server, einen Dateiserver oder Druckerserver, für welche jeweils eine Nutzerauthentisierung erforderlich ist.

In einem weiteren Aspekt betrifft die Erfindung ein Computersystem mit einem solchen Dienst-Computersystem, welches ferner ein oder mehrere Sicherheitstoken, ein oder mehrere Nutzer-Computersysteme und ein oder mehrere Terminals, insbesondere Smartphones beinhaltet.

Im Weiteren werden Ausführungsformen der Erfindung mit Bezugnahme auf die Zeichnungen näher erläutert. Es zeigen:
- Figur 1: ein Blockdiagramm einer Ausführungsform der Erfindung,
- Figur 2: ein Flussdiagramm einer Ausführungsform eines erfindungsgemäßen Verfahrens,
- Figur 3: ein Flussdiagramm einer weiteren Ausführungsform eines erfindungsgemäßen Verfahrens.

Im Weiteren werden einander entsprechende oder identische Elemente oder Schritte der nachfolgenden Ausführungsformen jeweils mit identischen Bezugszeichen gekennzeichnet.

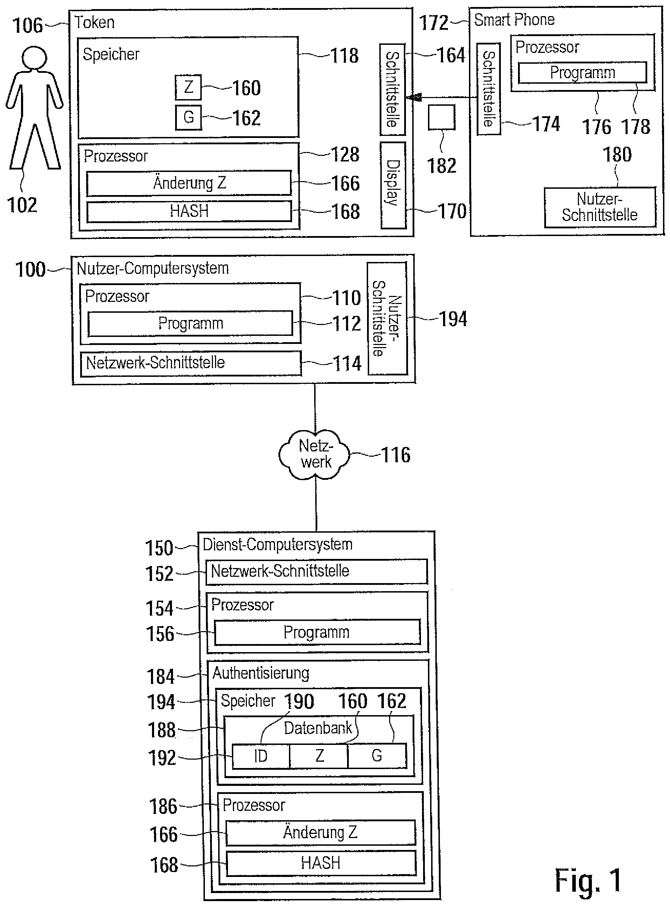

Die Figur 1 zeigt einen Sicherheitstoken 106 eines Nutzers 102. Der Sicherheitstoken 106 hat einen elektronischen Speicher 118, in dem erste Daten 160 und zweite Daten 162 gespeichert sind. Die ersten Daten 160 bestimmen einen Zustand Z des Sicherheitstokens 106, wie zum Beispiel den Zustand eines Zählers oder den Zustand eines deterministischen Zufallszahlengenerators, welchen der Sicherheitstoken 106 aufweisen kann.

Bei den zweiten Daten 162 handelt es sich um ein Geheimnis G des Nutzers 102 bzw. des Sicherheitstokens 106. Die ersten Daten 160 und die zweiten Daten 162 sind jeweils in geschützten Speicherbereichen des Speichers 118 abgespeichert, auf den nur ein Prozessor 128 des Sicherheitstokens 106 zugreifen kann, auf die aber kein unmittelbarer Zugriff über eine Schnittstelle 164 des Sicherheitstokens 106 möglich ist.

Der Prozessor 128 des Sicherheitstokens 106 dient zur Ausführung von Programminstruktionen 166 und zur Ausführung von Programminstruktionen 168. Durch die Programminstruktionen 166 wird eine Funktion implementiert, die zur Ermittlung von aktualisierten ersten Daten 160 dient.

Bei dieser Funktion kann es sich um einen Zähler handeln, wobei die ersten Daten 160 in diesem Fall der aktuelle Wert des Zählers sein können oder ein daraus zum Beispiel mittels einer weiteren kryptografischen Funktion abgeleiteter Wert. Der Zähler kann anstelle der Programminstruktionen 166 auch durch eine elektronische Schaltung des Sicherheitstokens 106 implementiert werden.

Durch die Programminstruktionen 168 wird ein Programmmodul zur kryptografischen Ableitung des OTP basierend auf den ersten Daten 160 und den zweiten Daten 162 gebildet. Insbesondere kann es sich hierbei um eine Keyed-Hash-Funktion handeln.

Der Sicherheitstoken 106 hat ferner ein Display 170, welches in den Körper des Sicherheitstokens 106, wie zum Beispiel einen Chipkartenkörper, integriert ist, und welches von dem Nutzer 102 abgelesen werden kann.

Der Sicherheitstoken 106 verfügt über keine eigene Energieversorgung zur Versorgung des Prozessors 128 und des Displays 170 mit elektrischer Energie. Zum Betrieb des Sicherheitstokens 106 ist es erforderlich, dass dieser in die Reichweite eines Terminals 172 gebracht wird, welches eine Trägerwelle aussendet, durch welche elektrische Energie über die Schnittstelle 164 in den Sicherheitstoken 106 eingekoppelt wird. Bei dem Terminal 172 kann es sich zum Beispiel um ein Smartphone handeln oder ein anderes mobiles Telekommunikationsgerät, welches eine der Schnittstelle 164 entsprechende Schnittstelle 174 aufweist, wie zum Beispiel eine NFC- und/oder RFID-Schnittstelle

Das Terminal 172 hat zumindest einen Prozessor 176 zur Ausführung eines Anwendungsprogramms, wie zum Beispiel einer sogenannten App. Alternativ kann die Funktionalität des Anwendungsprogramms 178 auch auf der Ebene des Betriebssystems des Terminals 172 implementiert sein.

Das Terminal 172 hat ferner eine Nutzerschnittstelle 180, wie zum Beispiel eine Tastatur oder einen Touchscreen.

Über die Nutzerschnittstelle 180 kann der Nutzer das Anwendungsprogramm 178 oder - je nach Ausführungsform - eine entsprechende Funktion des Betriebssystems aufrufen, um eine Anforderung zur Erzeugung eines OTPs einzugeben. Daraufhin erzeugt das Terminal 172 ein entsprechendes Kommando, welches in der Form von einer oder mehreren Kommando-APDUs 182 von der Schnittstelle 174 zu der Schnittstelle 164 übertragen wird.

Nutzerseitig ist ferner ein Nutzer-Computersystem 100 vorhanden. Bei dem Nutzer-Computersystem 100 kann es sich um einen Personal Computer (PC) oder einen Laptop-Computer handeln.

Das Nutzer-Computersystem 100 hat zumindest einen Prozessor 110 zur Ausführung von Programminstruktionen 112 sowie eine Netzwerk-Schnittstelle 114 zur Kommunikation über ein Netzwerk 116. Bei dem Netzwerk kann es sich um ein Computernetzwerk, wie zum Beispiel das Internet, handeln.

Durch die Programminstruktionen 112 wird beispielsweise ein üblicher Internetbrowser, wie zum Beispiel Microsoft Internet Explorer, gebildet, mithilfe dessen der Nutzer 102 eine Netzwerkverbindung über das Netzwerk 116 zum Beispiel mit einem Dienst-Computersystem 150 aufbauen kann.

Das Dienst-Computersystem 150 hat eine Netzwerk-Schnittstelle 152 zur Verbindung mit dem Netzwerk 116. Ferner hat das Dienst-Computersystem 150 zumindest einen Prozessor 154 zur Ausführung von Programminstruktionen 156, die zur Zurverfügungstellung des Dienstes dienen. Hierbei kann es sich zum Beispiel um die dynamische Generierung von html-Seiten handeln, um einem authentisierten Nutzer Zugriff auf bestimmte Informationen zu geben. Ferner kann durch die Programminstruktionen 156 beispielsweise ein VPN-Server, ein E-Mail-Server, ein Dateiserver oder ein Druckerserver implementiert werden.

Das Dienst-Computersystem 150 hat ein Authentisierungsmodul 184, welches zum Beispiel als Authentisierungsserver ausgebildet sein kann oder welches als Teil der Programminstruktionen 156 implementiert sein kann.

Das Authentisierungsmodul 184 hat in der hier betrachteten Ausführungsform einen Prozessor 186 mit Mitteln zur Ermittlung von aktualisierten ersten Daten, die durch die gleichen Programminstruktionen 166 implementiert sein können wie das für den Sicherheitstoken 106 der Fall ist. Ebenso verfügt das Authentisierungsmodul 184 über Mittel zur kryptografischen Ableitung des OTP, welche wiederum durch die gleichen Programminstruktionen 168 implementiert sein können, wie dies für den Sicherheitstoken 106 der Fall ist.

Das Authentisierungsmodul 184 kann ferner auf eine Datenbank 188 zugreifen, die eine externe Komponente oder, wie in der Figur 1 gezeigt, einen integralen Bestandteil des Authentisierungsmoduls 184 bilden kann. Bei der Datenbank 188 kann es sich um eine relationale Datenbank handeln, in der die ersten Daten 160 und die zweiten Daten 162 eines bestimmten Sicherheitstokens 106 bzw. eines bestimmten Nutzers 102 mit einem Identifikator des Sicherheitstokens 106 und/oder des Nutzers 102 als Zugriffsschlüssel gespeichert sind. Dies kann in der Form von einer oder mehreren Datenbanktabellen 192 erfolgen.

Die Datenbank 188 kann in einem elektronischen Speicher 194 des Authentisierungsmoduls 184 gespeichert sein.

Die Nutzung des von den Programminstruktionen 156 implementierten Dienstes durch den Nutzer 102 setzt dessen vorherige Registrierung voraus. Hierzu wird der Identifikator 190 des Nutzers 102, wie zum Beispiel eine Username-Passwort-Kombination, eine E-Mail-Adresse des Nutzers 102 oder ein Identifikator von dessen Sicherheitstoken 106, wie zum Beispiel eine Kartennummer des Sicherheitstokens 106, verwendet. Unter diesem Identifikator werden die initialen Werte für die ersten Daten 160 und die zweiten Daten 162 in der Datenbanktabelle 192 gespeichert, so wie sie auch bei der Herausgabe des Sicherheitstokens 106 in dem elektronischen Speicher 118 des Sicherheitstokens 106 gespeichert sind. Hierdurch wird sichergestellt, dass initial dieselbe Version der ersten Daten 160 in dem Sicherheitstoken 106 und in der Datenbanktabelle 192 gespeichert ist.

Zur Nutzung des von dem Dienst-Computersystem 150 zur Verfügung gestellten Dienstes kann wie folgt vorgegangen werden:
1. Der Nutzer 102 startet das Anwendungsprogramm 178 auf dem Terminal 172 über die Nutzerschnittstelle 180. Auf diese Art und Weise fordert der Nutzer 102 die Erzeugung eines OTP an. Von dem Anwendungsprogramm 178 wird der Nutzer 102 daraufhin über die Nutzerschnittstelle 180 aufgefordert, den Sicherheitstoken 106 in die Reichweite der Schnittstelle 174 des Terminals 172 zu bringen. Nachdem der Nutzer 102 dies getan hat, wird durch die von der Schnittstelle 174 ausgesendete Trägerwelle elektrische Energie in die Schnittstelle 164 eingekoppelt, sodass der Sicherheitstoken 106 mit elektrischer Energie versorgt wird und der Prozessor 128 zu arbeiten beginnt.
2. Von dem Anwendungsprogramm 178 wird dann eine Anforderung zur Erzeugung eines OTP generiert, welche von dem Terminal 172 über die Schnittstelle 174 als Kommando-APDU 182 (APDU = Application Protocol Data Unit) übertragen wird.
3. Aufgrund des Empfangs der Kommando-APDU 182 wird durch den Sicherheitstoken 106 die Ausführung der Programminstruktionen 168 gestartet. Hierdurch werden die ersten Daten 160 und die zweiten Daten 162 aus dem elektronischen Speicher 118 gelesen. Aus den ersten Daten 160 wird ein Hashwert berechnet. Dieser Hashwert wird mit den zweiten Daten 162 verschlüsselt, zum Beispiel nach einem symmetrischen Verschlüsselungsverfahren. Das Ergebnis dieser Keyed-Hashing-Funktion, die durch die Programminstruktionen 168 implementiert wird, ist das OTP. Der Prozessor 128 steuert dann das Display 170 an, sodass das OTP auf dem Display 170 angezeigt wird.
4. Ferner wird die Ausführung der Programminstruktionen 166 gestartet, um die ersten Daten 160 zu aktualisieren. Für den Fall, dass die Programminstruktionen 166 einen Zähler implementieren, handelt es sich bei den ersten Daten 160 um den Wert Z des Zählers. Zur Aktualisierung des Werts Z wird dieser durch Ausführung der Programminstruktionen 166 je nach Ausführungsform entweder inkrementiert oder dekrementiert. Der daraus resultierende aktualisierte Wert des Zählers wird in den elektronischen Speicher 118 gespeichert, wobei die vorherige Version des Werts Z überschrieben wird. Das Geheimnis G, das heißt die zweiten Daten 162, bleiben dagegen unverändert.
5. Der Nutzer 102 stellt mithilfe seines Nutzer-Computersystems 100 eine Netzwerkverbindung über das Netzwerk 116 mit dem Dienst-Computersystem 150 her. Dies kann so erfolgen, dass der Nutzer 102 den durch die Programminstruktionen 112 implementierten Internetbrowser startet und eine URL des Dienst-Computersystems 150 eingibt. Das Dienst-Computersystem 150 generiert daraufhin eine Aufforderung an den Nutzer 102 zu dessen Authentisierung, wobei diese Anforderung auf dem Internetbrowser angezeigt wird.
6. Über eine Nutzerschnittstelle 194 des Nutzer-Computersystems 100, wie zum Beispiel eine Tastatur, gibt der Nutzer dann das OTP in das Nutzer-Computersystem 100, das heißt die von dem Internetbrowser angezeigte Webseite des Dienst-Computersystems 150, ein. Hierzu liest der Nutzer 102 das auf dem Display 170 des Sicherheitstokens 106 angezeigte OTP ab und gibt dieses manuell zum Beispiel über eine Tastatur der Nutzerschnittstelle 194 ein. Alternativ kann auch eine Spracheingabe erfolgen oder eine automatisierte Eingabe. Beispielsweise ist es möglich, dass das Nutzer-Computersystem 100 mit einer Kamera ausgestattet ist, wie zum Beispiel einer sogenannten Webcam, mithilfe derer das auf dem Display 170 angezeigte OTP aufgenommen und erfasst wird. Zusätzlich zu dem OTP gibt der Nutzer 102 in die Webseite des Dienst-Computersystems 150, die von seinem Internetbrowser auf dem Nutzer-Computersystem 100 angezeigt wird, seinen Identifikator ein.
7. Das OTP und der Identifikator werden dann über die Netzwerkverbindung über das Netzwerk 116 von dem Nutzer-Computersystem 100 an das Dienst-Computersystem 150 übertragen, nachdem der Nutzer 102 beispielsweise die Enter-Taste auf seiner Tastatur betätigt hat.
8. Aufgrund des Empfangs des Identifikators und des OTPs wird dann durch das Authentisierungsmodul 184 ein Zugriff auf die Datenbank 188 mit dem Identifikator als Zugriffsschlüssel durchgeführt, um die in der Datenbanktabelle 192 gespeicherte Version der ersten Daten 160 und der zweiten Daten 162 auszulesen.
9. Daraufhin wird die Ausführung der Programminstruktionen 168 gestartet, um zunächst einen Hashwert aus den ersten Daten 160 zu erzeugen, welcher dann mithilfe der zweiten Daten 162 verschlüsselt wird, und zwar nach demselben Keyed-Hash-Verfahren, wie dies auch durch die Programminstruktionen 168 seitens des Sicherheitstokens 106 implementiert wird.
10.Das Authentisierungsmodul 184 vergleicht dann das von dem Nutzer-Computersystem 100 über die Netzwerkverbindung empfangene OTP mit dem seitens des Authentisierungsmoduls 184 abgeleiteten weiteren OTP. Bei Übereinstimmung der beiden OTPs gilt der Nutzer 102 als authentisiert und das Authentisierungsmodul 184 generiert ein Authentisierungssignal, woraufhin eine Nutzung des von den Programminstruktionen 156 implementierten Dienstes durch den Nutzer 102 freigegeben wird. Ein entsprechendes Freigabesignal kann über die Netzwerkverbindung von dem Dienst-Computersystem 150 an den Internetbrowser des Nutzer-Computersystems 100 übertragen und dort angezeigt werden. Im gegenteiligen Fall wird von dem Authentisierungsmodul 184 ein Fehlersignal generiert, welches ebenfalls zu dem Nutzer-Computersystem 100 übertragen und auf dem Internetbrowser angezeigt werden kann, wie zum Beispiel "Authentisierung fehlgeschlagen".
11.Ferner wird die Ausführung der Programminstruktionen 166 gestartet, um die ersten Daten 160, die in der Datenbank 188 gespeichert sind, ebenfalls zu aktualisieren, wie dies zuvor schon seitens des Sicherheitstokens 106 bezüglich der in dem Speicher 118 gespeicherten Version der ersten Daten 160 erfolgt ist. Im Falle einer Implementierung in Form eines Zählers wird durch die Programminstruktionen 166 der Wert von Z wiederum inkrementiert oder dekrementiert und dann der so aktualisierte Wert von Z in die Datenbank 188 zurückgeschrieben, beispielsweise indem der zuvor in der Datenbanktabelle 192 gespeicherte Wert von Z überschrieben wird. Im Ergebnis sind dann dieselben Versionen der ersten Daten 160 in dem Sicherheitstoken 106 und in der Datenbank 188 gespeichert.

Bei einer nachfolgenden Authentisierung des Nutzers 102 wird in gleicher Art und Weise verfahren, wobei dann aufgrund des Empfangs einer weiteren Kommando-APDU 182 die in dem Speicher 118 bzw. der Datenbank 188 gespeicherten aktualisierten Werte von Z für die Erzeugung des nächstfolgenden OTPs verwendet werden. In entsprechender Art und Weise wird für alle nachfolgenden OTPs verfahren.

Nach einer weiteren Ausführungsform der Erfindung wird nicht unmittelbar der Wert des Zählers Z verwendet, um daraus einen Hashwert durch die Programminstruktionen 168 abzuleiten, sondern es wird zunächst aus Z ein weiterer Wert A abgeleitet. Für diesen Wert A wird dann durch die Programminstruktionen 168 ein Hashwert gebildet, der dann anschließend mithilfe der zweiten Daten 162 verschlüsselt wird. Die Ableitung des Werts A aus dem Wert Z kann im Prinzip mit jeder injektiven mathematischen Funktion erfolgen.

Bei einer Ausführungsform, bei der die Programminstruktionen 166 einen deterministischen Zufallszahlengenerator implementieren, verhält es sich wie folgt: In diesem Fall kann es sich bei den ersten Daten 160 um mehrere Datenwerte handeln, die den aktuellen Zustand des Zufallszahlengenerators festlegen, wie zum Beispiel die Inhalte von dessen Schieberegistern oder Programmvariablen. Dabei entspricht jeder Zustand i des Zufallszahlengenerators einem i-ten Glied der Folge von Zufallszahlen, die der Zufallszahlengenerator bei entsprechender Taktung nacheinander ausgibt.

Bei dieser Implementierung wird der Hashwert nicht unmittelbar aus den ersten Daten 160 berechnet, sondern aus der i-ten Zufallszahl der Folge von Zufallszahlen, welche aufgrund der aktuellen Version der ersten Daten 160 am Ausgang des Zufallszahlengenerators resultiert. Es wird also der Hashwert aus dem i-ten Glied der Folge von Zufallszahlen berechnet, welche durch die aktuelle Version der ersten Daten festgelegt ist, und dieser Hashwert wird dann wiederum mit den zweiten Daten 162 verschlüsselt, woraus sich das OTP ergibt.

Die Aktualisierung der ersten Daten 160 erfolgt hier so, dass die Erzeugung der nächsten Zufallszahl i+1 der Folge von dem Zufallszahlengenerator angefordert wird, indem dieser beispielsweise ein Taktsignal erhält, wodurch dessen Schieberegister angesprochen werden, sodass sich hierdurch der Zustand des Zufallszahlengenerators entsprechend ändert, insbesondere die in den Schieberegistern gespeicherten Werte. Diese Werte werden dann als aktualisierte erste Daten 160 in dem elektronischen Speicher 118 bzw. der Datenbank 188 gespeichert. Für eine nachfolgende Erzeugung des i+1. Gliedes der Folge werden die ersten Daten 160 wieder in den Zufallszahlengenerator, das heißt die Programminstruktionen 166, geladen, um hierdurch das i+1. Glied der Folge zu erhalten.

Bei einer Ausführungsform, bei der die Programminstruktionen 166 einen Zufallszahlengenerator implementieren, kann also wie folgt vorgegangen werden:
Aufgrund des Empfangs der Kommando-APDU 182 werden die ersten Daten 160 in dem durch die Programminstruktionen 166 implementierten Zufallszahlengenerator eingegeben, welcher daraufhin das durch die ersten Daten 160 repräsentierte i-te Glied der Folge von Zufallszahlen ausgibt. Aus diesem i-ten Glied der Folge wird dann das OTP berechnet, und zwar durch Ausführung der Programminstruktionen 168. Zur Aktualisierung der ersten Daten 160 wird die Erzeugung einer weiteren Zufallszahl von dem Zufallszahlengenerator angefordert, nämlich die Erzeugung des i+1. Gliedes der Folge. Hierdurch ändert sich zwangsläufig der Zustand des Zufallszahlengenerators und damit die ersten Daten 160. Diese somit aktualisierten ersten Daten 160 ersetzen dann die zuvor in dem Speicher 118 bzw. der Datenbanktabelle 192 gespeicherten ersten Daten 160.

Ansonsten wird genauso vorgegangen wie bei der Ausführungsform mit Zähler.

Wenn es sich bei den von dem Zufallszahlengenerator erzeugten Pseudozufallszahlen um eine (modifizierte) Blockchiffre handelt, kann er die Keyed-Hash-Function ersetzen. Anstelle des hashens der ersten Daten mit den zweiten Daten verschlüsselt der Pseudo-Zufallszahlengenerator die ersten Daten mit den zweiten Daten. Das hier beschriebene anschließende Hashen des Kryptogramms mit den zweiten Daten kann dann entfallen.

Wenn beispielsweise der Zufallszahlengenerator ein Blockchiffre für PRNG_i, d.h. den ersten Daten, mit Hilfe eines seeds, d.h. den zweiten Daten, erzeugt, kann zur Aktualisierung der ersten Daten wie folgt vorgegangen werden:
PRNG_1 = Blockchiffre (PRNG_0, Seed)
PRNG_2 = Blockchiffre (PRNG_1, Seed)
PRNG_3 = Blockchiffre (PRNG_2, Seed)
   ...
PRNG_i+1 = Blockchiffre (PRNG_i, Seed)

Zur Implementierung des Zufallszahlengenerators kann ein Verschlüsselungsalgorithmus verwendet werden, wie z.B. AES, DES oder Tripple DES. Dadurch ist ein hohes Maß an Entropie sichergestellt.

Beim Betrieb des in der Figur 1 gezeigten Computersystems kann es vorkommen, dass der Nutzer 102 zwar die Erzeugung eines OTPs anfordert, und dieses auch auf dem Display 170 angezeigt wird, dieses dann aber nicht in das Nutzer-Computersystem 100 zur Übertragung an das Dienst-Computersystem 150 eingibt, weil der Nutzer 102 den geplanten Dienst doch nicht nutzen möchte, zum Beispiel weil er bei seiner Tätigkeit unterbrochen worden ist.

Dies hat zur Folge, dass zwar die ersten Daten 160 in den elektronischen Speicher 118 aktualisiert werden, nicht aber die ersten Daten 160 in der Datenbanktabelle 192. Wenn zu einem späteren Zeitpunkt der Nutzer 102 doch den Dienst nutzen möchte, so bringt er seinen Sicherheitstoken 106 erneut in die Reichweite des Terminals 172 und fordert erneut die Erzeugung eines OTPs an. Dies hat zur Folge, dass seitens des Sicherheitstokens 106 das OTP auf der Basis einer neueren Version der ersten Daten 160 erzeugt wird, als dies seitens des Authentisierungsmoduls 184 der Fall ist.

Das von dem Dienst-Computersystem 150 über die Netzwerkverbindung empfangene OTP muss sich daher von dem OTP unterscheiden, welches das Authentisierungsmodul generiert. Um in einer solchen Situation dennoch eine Authentisierung zu ermöglichen, wird wie folgt vorgegangen:
Wenn das empfangene OTP nicht mit dem von dem Authentisierungsmodul erzeugten weiteren OTP übereinstimmt, werden durch Ausführung der Programminstruktionen 166 durch das Authentisierungsmodul 184 die ersten Daten 160 aktualisiert, ohne diese zunächst in die Datenbanktabelle 192 zurückzuschreiben. Mithilfe dieser aktualisierten Version der ersten Daten 160 wird dann erneut ein weiteres OTP durch das Authentisierungsmodul 184 erzeugt und mit dem empfangenen OTP verglichen.

Liegt nun eine Übereinstimmung vor, so gilt der Nutzer 102 als authentisiert. Schlägt die Überprüfung wiederum fehl, das heißt stimmen das empfangende OTP und das weitere OTP immer noch nicht überein, so werden die ersten Daten 160 erneut von dem Authentisierungsmodul 184 durch die Ausführung der Programminstruktionen 166 aktualisiert. Dieser Vorgang wird so lange durchgeführt, bis eine Übereinstimmung der OTPs vorliegt oder bis eine Abbruchbedingung erreicht ist. Als Abbruchbedingung kann beispielsweise eine maximale Anzahl von Wiederholungen festgelegt sein, um dadurch einen "brute force"-Angriff abwehren zu können.

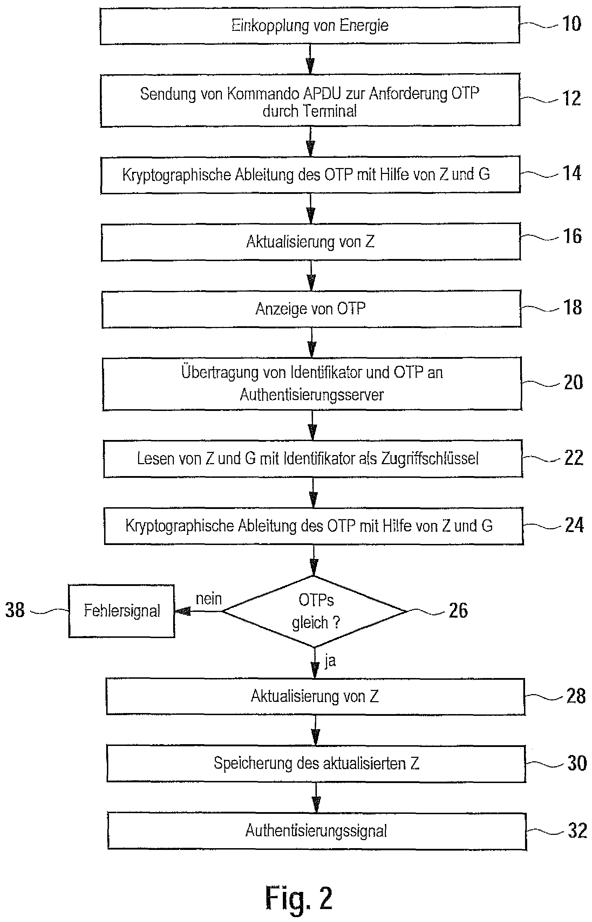

Die Figur 2 zeigt eine Ausführungsform eines erfindungsgemäßen Verfahrens.

In dem Schritt 10 bringt der Nutzer 102 den Sicherheitstoken 106 in die Reichweite des Terminals 172, sodass der Sicherheitstoken 106 mit Energie versorgt wird. In dem Schritt 12 wird dann eine Kommando-APDU 182 von dem Terminal 172 an den Sicherheitstoken 106 gesendet, um die Erzeugung eines OTP anzufordern. In dem Schritt 14 liest der Sicherheitstoken 106 die ersten Daten 160 und die zweiten Daten 162 aus seinem Speicher und leitet daraus mithilfe seiner Keyed-Hash-Funktion, wie sie durch die Programminstruktionen 168 implementiert wird, das OTP ab. Anschließend werden in dem Schritt 16 die ersten Daten aktualisiert und in dem Speicher 118 gespeichert, um die vorherige Version der ersten Daten durch die aktualisierten ersten Daten zu ersetzen.

Das von dem Sicherheitstoken 106 erzeugte OTP wird in dem Schritt 18 auf dem Display 170 des Sicherheitstokens 106 angezeigt.

In dem Schritt 20 wird eine Netzwerkverbindung zwischen dem Nutzer-Computersystem 100 und dem Dienst-Computersystem 150 aufgebaut. Das OTP wird von dem Nutzer 102 von dem Display 170 abgelesen und über eine Nutzerschnittstelle 194 in das Computersystem 100 eingegeben sowie auch ein Identifikator des Nutzers 102 und/oder des Sicherheitstokens 106. Der Identifikator kann auch in dem Nutzer-Computersystem 100 gespeichert sein, wenn der Nutzer immer denselben Sicherheitstoken benutzt oder nur ein Nutzer das Nutzer-Computersystem 100 nutzt - dann ist nicht jedes Mal eine Eingabe des Identifikators erforderlich.

Über die Netzwerkverbindung werden das OTP und der Identifikator an einen Authentisierungsserver des Dienst-Computersystems 150, beispielsweise das Authentisierungsmodul 184, übertragen. Der Authentisierungsserver liest in dem Schritt 22 die ersten Daten 160 und die zweiten Daten 162 aus einer Datenbank mithilfe des Identifikators als Zugriffsschlüssel und leitet in dem Schritt 24 das OTP mithilfe desselben kryptografischen Algorithmus, das heißt beispielsweise mithilfe einer Keyed-Hash-Funktion, aus den ersten und zweiten Daten ab, die zuvor aus der Datenbank gelesen worden sind.

In dem Schritt 26 überprüft der Authentisierungsserver dann, ob das von dem Nutzer-Computersystem empfangene OTP mit dem durch den Authentisierungsserver abgeleiteten OTP übereinstimmt. Ist dies der Fall, werden in dem Schritt 28 die ersten Daten seitens des Authentisierungsservers aktualisiert und in dem Schritt 30 in der Datenbanktabelle 192 gespeichert. In dem Schritt 32 wird schließlich ein Authentisierungssignal von dem Authentisierungsserver generiert, sodass die Nutzung des von dem Dienst-Computersystem zur Verfügung gestellten Dienstes für den Nutzer 102 freigegeben wird.

Falls die Überprüfung der OTPs in dem Schritt 26 ergibt, dass diese nicht übereinstimmen, wird hingegen von dem Authentisierungsserver in dem Schritt 38 ein Fehlersignal generiert, sodass eine Nutzung des Dienstes durch den Nutzer 102 nicht möglich ist.

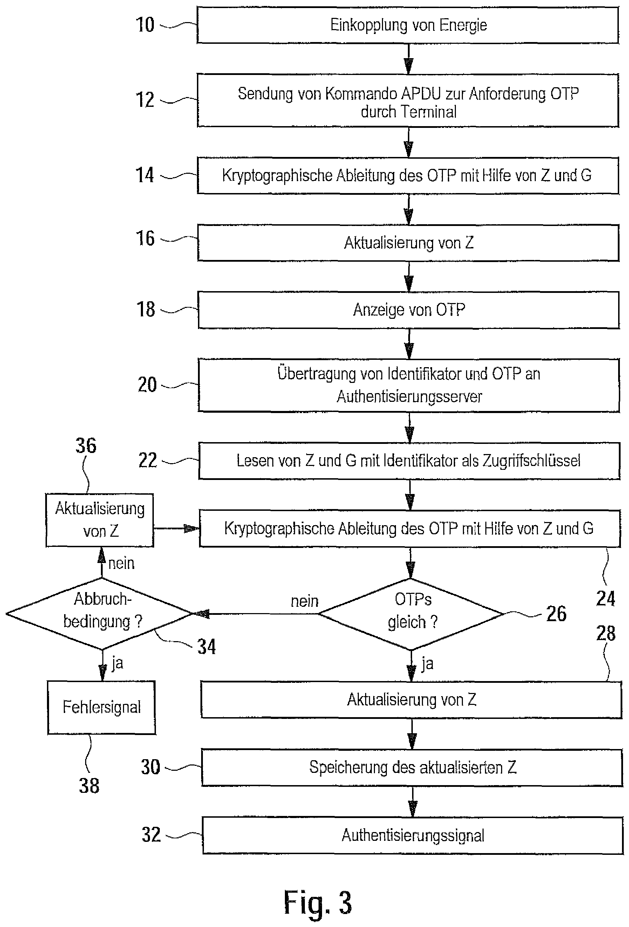

Die Figur 3 zeigt eine alternative Ausführungsform eines erfindungsgemäßen Verfahrens, wobei die Schritte 10 bis 32 identisch sind zu der Ausführungsform gemäß Figur 2. Im Unterschied zu der Ausführungsform gemäß Figur 2 wird für den Fall, dass die Überprüfung in dem Schritt 26 keine Übereinstimmung der OTPs ergibt, zu dem Schritt 34 verzweigt, in dem geprüft wird, ob eine Abbruchbedingung erfüllt ist.

Bei dieser Abbruchbedingung kann es sich um eine maximale Anzahl von Wiederholungen des Schritts 26 oder eine Zeitdauer handeln. Wenn die Abbruchbedingung nicht erfüllt ist, wird anschließend der Schritt 36 ausgeführt, indem seitens des Authentisierungsservers eine Aktualisierung der ersten Daten vorgenommen wird. Auf der Basis dieser nur authentisierungsserverseitig vorgenommenen Aktualisierung wird dann der Schritt 24 erneut durchgeführt und in dem Schritt 26 wird erneut eine Überprüfung der OTPs vorgenommen. Falls diese immer noch nicht übereinstimmen sollten, werden die Schritte 34, 36, 24 und 26 so lange wiederholend ausgeführt, bis eine Übereinstimmung vorliegt oder bis die Abbruchbedingung erfüllt ist. Erst nach Erfüllung der Abbruchbedingung wird dann bei dieser Ausführungsform das Fehlersignal in dem Schritt 38 erzeugt.

### Bezugszeichenliste

- 100: Nutzer-Computersystem
- 102: Nutzer
- 106: Sicherheitstoken
- 110: Prozessor
- 112: Programminstruktionen
- 114: Netzwerk-Schnittstelle
- 116: Netzwerk
- 118: elektronischer Speicher
- 128: Prozessor
- 150: Dienst-Computersystem
- 152: Netzwerk-Schnittstelle
- 154: Prozessor
- 156: Programminstruktionen
- 160: erste Daten
- 162: zweite Daten
- 164: Schnittstelle
- 166: Programminstruktionen
- 168: Programminstruktionen
- 170: Display
- 172: Terminal
- 174: Schnittstelle
- 176: Prozessor
- 178: Anwendungsprogramm
- 180: Nutzerschnittstelle
- 182: Kommando-APDU
- 184: Authentisierungsmodul
- 186: Prozessor
- 188: Datenbank
- 190: Identifikator
- 192: Datenbanktabelle
- 194: Nutzerschnittstelle

## Patentansprüche

1. Verfahren zur Erzeugung eines OTP durch einen Sicherheitstoken (106) zur Authentisierung gegenüber einem Authentisierungsmodul (184), wobei der Sicherheitstoken einen elektronischen Speicher (118) aufweist, auf den kein unmittelbarer Zugriff über eine Schnittstelle (164) des Sicherheitstokens (106) möglich ist, sondern nur ein Prozessor (128) des Sicherheitstokens einen Speicherzugriff durchführen kann, wobei in dem elektronischen Speicher erste (160) und zweite (162) Daten gespeichert sind, und wobei zusätzlich in einer Datenbank (188) eine Version der ersten Daten und der zweiten Daten gespeichert ist, mit folgenden Schritten:
- Einkopplung von elektrischer Energie zur Energieversorgung des Sicherheitstokens durch ein Terminal (172),
- Senden eines Kommandos (182) zur Erzeugung des OTP von dem Terminal an den Sicherheitstoken,
- kryptografische Ableitung (168) des OTP aus den ersten und zweiten Daten, die in dem elektronischen Speicher gespeichert sind, durch den Sicherheitstoken, wobei die kryptografische Ableitung des OTP durch eine Keyed Hash-Funktion erfolgt, wobei die zweiten Daten als geheimer Schlüssel zur Verschlüsselung eines aus einem Eingangswert der Keyed Hash-Funktion berechneten Hashwert verwendet werden, wobei die ersten Daten, ein aus den ersten Daten abgeleiteter Wert oder ein durch die ersten Daten bestimmter Wert als Eingangswert verwendet werden,
- Anzeige des OTP auf einer Anzeigevorrichtung (170) des Sicherheitstokens,
- Ermittlung von aktualisierten ersten Daten mithilfe einer Funktion (166) durch den Sicherheitstoken,
- Ersetzung der ersten Daten durch die aktualisierten ersten Daten in dem elektronischen Speicher durch den Sicherheitstoken, wobei die zweiten Daten unverändert bleiben,
- Herstellung einer Netzwerkverbindung zwischen einem Nutzer-Computersystem (100) und dem Authentisierungsmodul,
- Eingabe des OTP in das Nutzer-Computersystem,
- Übertragung eines Identifikators und des OTP von dem Nutzer-Computersystem über die Netzwerkverbindung an das Authentisierungsmodul,
- Zugriff des Authentisierungsmoduls auf die Datenbank (188) mit dem Identifikator als Zugriffsschlüssel zum Auslesen der in die Datenbank gespeicherten Version der ersten und zweiten Daten,
- kryptografische Ableitung (168, 186) eines weiteren OTP durch das Authentisierungsmodul mit der aus der Datenbank ausgelesenen Version der ersten und zweiten Daten,
- Prüfung durch das Authentisierungsmodul, ob das OTP und das weitere OTP übereinstimmen, und wenn dies der Fall ist, Erzeugung eines Authentisierungssignals, Ermittlung von aktualisierten ersten Daten mithilfe der Funktion durch den Authentisierungsmodul, Speicherung der aktualisierten ersten Daten in der Datenbank als die aktuelle Version der ersten Daten, unter der Voraussetzung, dass das OTP und das weitere OTP übereinstimmen.

2. Verfahren nach Anspruch 1, wobei die kryptografische Ableitung des OTP durch den Sicherheitstoken und durch den Authentisierungsmodul jeweils nach Ermittlung der aktualisierten ersten Daten mithilfe der Funktion erfolgt, so dass die kryptografische Ableitung aus den ersten und zweiten Daten oder den aktualisierten ersten Daten und den zweiten Daten erfolgt, und/oder wobei die Anzeige des OTP auf der Anzeigevorrichtung des Sicherheitstokens vor oder nach der Aktualisierung der ersten Daten durch den Sicherheitstoken erfolgt.

3. Verfahren nach Anspruch 1 oder 2, wobei die Einkopplung der elektrischen Energie kontaktlos erfolgt, insbesondere durch elektromagnetische Kopplung, insbesondere nach einem NFC- oder RFID-Verfahren.

4. Verfahren nach einem der vorhergehenden Ansprüche, wobei es sich bei der Funktion zur Ermittlung der aktualisierten ersten Daten um einen Zähler handelt, der zur Ermittlung der aktualisierten ersten Daten inkrementiert oder dekrementiert wird.

5. Verfahren nach einem der vorhergehenden Ansprüche 1 bis 3, wobei es sich bei der Funktion zur Ermittlung der aktualisierten ersten Daten um einen deterministischen Zufallszahlengenerator handelt, der zur Erzeugung einer Folge von N Zufallszahlen ausgebildet ist, wobei die ersten Daten ein i-tes Glied der Folge bestimmen, wobei das i-te Glied der Folge in die kryptografische Ableitung des OTP bzw. die kryptografische Ableitung des weiteren OTP eingeht.

6. Verfahren nach einem der vorhergehenden Ansprüche, wobei es sich bei dem Sicherheitstoken um ein Wert- oder Sicherheitsdokument handelt, wie zum Beispiel ein Ausweisdokument, das heißt ein ID-Dokument, insbesondere einen elektronischen Personalausweis, Reisepass, Führerschein, Firmenausweis oder ein Zahlungsmittel, wie zum Beispiel eine Banknote, eine Kreditkarte oder einen sonstigen Berechtigungsnachweis, wie zum Beispiel eine Eintrittskarte, einen Frachtbrief oder ein Visum, insbesondere eine Chipkarte oder einen USB Stick, insbesondere mit RFID- und/oder NFC-Schnittstelle.

7. Verfahren nach einem der vorhergehenden Ansprüche, wobei es sich bei der Anzeigevorrichtung des Sicherheitstokens um eine bistabile Anzeigevorrichtung, eine elektrophoretische Anzeige, eine elektrochrome Anzeige, eine Flüssigkeitskristallanzeige (LCD), LED-Anzeige, insbesondere anorganische LED- oder organische LED-Anzeige (OLED), Drehelementanzeige, Balkenanzeige, Photolumineszenz-Löschungsanzeige oder eine Anzeige auf Basis des Elektrowetting-Effekts oder eine Hybridanzeige handelt.

8. Verfahren nach einem der vorhergehenden Ansprüche, wobei von dem Authentisierungsmodul die folgenden weiteren Schritte durchgeführt werden, wenn keine Übereinstimmung des OTP und des weiteren OTP festgestellt wird:
- Übermittlung von aktualisierten ersten Daten mithilfe der Funktion durch das Authentisierungsmodul,
- nochmalige kryptografische Ableitung des weiteren OTP durch den Authentisierungsmodul mit den zweiten Daten und den aktualisierten ersten Daten,
- nochmalige Überprüfung, ob eine Übereinstimmung zwischen dem über die Netzwerkverbindung empfangenen OTP und dem weiteren OTP vorliegt, und wenn dies nicht der Fall ist, wiederholte Durchführung der oben genannten Schritte bis eine Übereinstimmung vorliegt oder eine Abbruchbedingung erreicht ist.

9. Verfahren nach Anspruch 8, wobei es sich bei der Abbruchbedingung um eine vorgegebene maximale Anzahl von Wiederholungen oder eine Zeitdauer handelt.

10. Sicherheitstoken zur Erzeugung eines OTP mit
- Mitteln (164) zur Einkopplung von elektrischer Energie zur Energieversorgung des Sicherheitstokens durch einen Terminal (172),
- Mitteln (164) zum Empfangen eines Kommandos (182) zur Erzeugung des OTP von dem Terminal,
- Mitteln (168) zur kryptografischen Ableitung des OTP mithilfe von in einem elektronischen Speicher des Sicherheitstokens gespeicherten ersten (160) und zweiten (162) Daten, wobei die Mittel zur kryptografischen Ableitung des OTP eine Keyed-Hash-Funktion aufweisen, bei der die zweiten Daten als geheimer Schlüssel zur Verschlüsselung eines aus einem Eingangswert der Keyed Hash-Funktion berechneten Hashwert verwendet werden, wobei die ersten Daten, ein aus den ersten Daten abgeleiteter Wert oder ein durch die ersten Daten bestimmter Wert als Eingangswert verwendet werden,
- Mitteln (128) zur Anzeige des OTP auf einer Anzeigevorrichtung (170) des Sicherheitstokens,
- Mitteln (128, 166) zur Ermittlung von aktualisierten ersten Daten mithilfe einer Funktion, und
- Mitteln (128) zur Ersetzung der ersten Daten durch die aktualisierten ersten Daten in dem elektronischen Speicher des Sicherheitstokens.

11. Sicherheitstoken nach Anspruch 10, wobei die Schnittstelle (164) des Sicherheitstokens eine kontaktlose Schnittstelle ist, insbesondere eine NFC- und/oder RFID-Schnittstelle, welche zur Kommunikation mit dem Terminal und zur Einkopplung der elektrischen Energie durch das Terminal dient, wobei der Sicherheitstoken über keine eigene Energieversorgung verfügt.

12. Sicherheitstoken nach Anspruch 10 oder 11, wobei der Sicherheitstoken einen Zähler oder einen deterministischen Zufallszahlengenerator für die Ermittlung der aktualisierten ersten Daten aufweist.

13. Dienst-Computersystem mit Mitteln (154, 156) zur Erbringung eines Dienstes, für welchen eine Authentisierung erforderlich ist, und mit
- Authentisierungsmitteln (184),
- Mitteln (152) zur Herstellung einer Netzwerkverbindung mit einem Nutzer-Computersystem (194), welche zur Übertragung eines Identifikators und eines OTP von dem Nutzer-Computersystem an das Dienst-Computersystem ausgebildet ist,
- Datenbankmitteln (188), in der eine Version von ersten und zweiten Daten mit dem Identifikator als Zugriffsschlüssel gespeichert sind,
wobei die Authentisierungsmittel Mittel (168, 186) zur kryptografischen Ableitung eines weiteren OTP mithilfe der aus der Datenbank ausgelesenen Version der ersten und zweiten Daten aufweist, wobei die Mittel zur kryptografischen Ableitung des weiteren OTP eine Keyed-Hash-Funktion aufweisen, bei der die zweiten Daten als geheimer Schlüssel zur Verschlüsselung eines aus einem Eingangswert der Keyed Hash-Funktion berechneten Hashwert verwendet werden, wobei die ersten Daten, ein aus den ersten Daten abgeleiteter Wert oder ein durch die ersten Daten bestimmter Wert als Eingangswert verwendet werden, und die Authentisierungsmittel dazu ausgebildet sind, das über die Netzwerkverbindung empfangene OTP mit dem weiteren OTP auf Übereinstimmung zu prüfen, und ein Authentisierungssignal zu erzeugen, wenn eine solche Übereinstimmung vorliegt, sowie zur Ermittlung von aktualisierten ersten Daten mithilfe einer Funktion (166, 186) sowie der Speicherung der aktualisierten ersten Daten in der Datenbank, wenn eine Übereinstimmung des OTP und des weiteren OTP vorliegt.

14. Computersystem mit einem Dienst-Computersystem nach Anspruch 13, einem Nutzer-Computersystem (100), einem Terminal (172) und einem Sicherheitstoken (106) nach einem der Ansprüche 1 bis12.

15. Computersystem nach Anspruch 14, wobei das Terminal durch ein Smartphone mit NFC- und/oder RFID-Schnittstelle gebildet wird.

## Claims

1. A method for generating an OTP by a security token (106) for authentication to an authentication module (184), wherein the security token has an electronic memory (118), which is not available for direct access via an interface (164) of the security token (106), and only a processor (128) of the security token may perform memory access, wherein first data (160) and second data (162) are stored in the electronic memory, and wherein a version of the first data and of the second data is stored additionally in a database (188), the method having the following steps:
- coupling in electrical energy through a terminal (172) in order to supply energy to the security token,
- sending a command (182) to generate the OTP from the terminal to the security token,
- by means of the security token, cryptographically deriving (168) the OTP from the first and second data, which are stored in the electronic memory, wherein the cryptographic derivation of the OTP is performed by a keyed hash function, wherein the second data are used as a secret key for encrypting a hash value calculated from an input value of the keyed hash function, wherein the first data, a value derived from the first data, or a value determined by the first data are/is used as input value,
- displaying the OTP on a display device (170) of the security token,
- determining updated first data with the aid of a function (166) by the security token,
- by means of the security token, replacing the first data by the updated first data in the electronic memory, wherein the second data remain unchanged,
- producing a network connection between a user computer system (100) and the authentication module,
- inputting the OTP into the user computer system,
- transmitting an identifier and the OTP from the user computer system, via the network connection, to the authentication module,
- accessing the database (188) by the authentication module with the identifier as access key in order to read the version of the first and second data stored in the database,
- cryptographically deriving (168, 186) a further OTP by means of the authentication module with the version of the first and second data read from the database,
- checking, by the authentication module, whether the OTP and the further OTP match, and, if so, generating an authentication signal, determining updated first data with the aid of the function by means of the authentication module, and storing the updated first data in the database as the current version of the first data, on the condition that the OTP and the further OTP match.

2. The method according to claim 1, wherein the OTP is cryptographically derived by way of the security token and by way of the authentication module in each case once the updated first data have been determined with the aid of the function, such that the OTP is cryptographically derived from the first and second data or the updated first data and the second data, and/or wherein the OTP is displayed on the display device of the security token before or after the updating of the first data by the security token.

3. The method according to claim 1 or 2, wherein the electrical energy is coupled in contactlessly, in particular by electromagnetic coupling, in particular by an NFC or RFID method.

4. The method according to any one of the preceding claims, wherein the function for determining the updated first data is a counter which is incremented or decremented in order to determine the updated first data.

5. The method according to any one of preceding claims 1 to 3, wherein the function for determining the updated first data is a deterministic random number generator, which is designed to generate a sequence of N random numbers, wherein the first data determine an i^{th} member of the sequence, wherein the i^{th} member of the sequence is included in the cryptographic derivation of the OTP or the cryptographic derivation of the further OTP.

6. The method according to any one of the preceding claims, wherein the security token is a value document or security document, for example an identity document, that is to say an ID document, in particular an electronic identity card, passport, driver's licence, company identification document, or a payment means, such as a banknote, a credit card, or another proof of authority, such as an admission ticket, a consignment note, or a visa, in particular a chip card or a USB stick, in particular with RFID and/or NFC interface.

7. The method according to any one of the preceding claims, wherein the display device of the security token is a bistable display device, an electrophoretic display, an electrochromic display, a liquid-crystal display (LCD), LED display, in particular inorganic LED or organic LED display (OLED), rotary element display, bargraph display, photoluminescence quenching display or a display based on the electrowetting effect or a hybrid display.

8. The method according to any one of the preceding claims, wherein the following further steps are carried out by the authentication module if it is determined that the OTP and the further OTP do not match:
- by means of the authentication module, transmitting updated first data with the aid of the function,
- once again cryptographically deriving the further OTP by means of the authentication module with the second data and the updated first data,
- once again checking whether there is a match between the OTP received via the network connection and the further OTP, and, if this is not the case, repeatedly carrying out the above-mentioned steps until there is a match or a termination condition is satisfied.

9. The method according to claim 8, wherein the termination condition is a predefined maximum number of repetitions or a period of time.

10. A security token for generating an OTP with
- means (164) for coupling in electrical energy through a terminal (172) in order to supply energy to the security token,
- means (164) for receiving a command (182) to generate the OTP from the terminal,
- means (168) for cryptographically deriving the OTP with the aid of first data (160) and second data (162), which are stored in an electronic memory of the security token, wherein the means for cryptographically deriving the OTP comprise a keyed hash function, in which the second data are used as a secret key for encrypting a hash value calculated from an input value of the keyed hash function, wherein the first data, a value derived from the first data, or a value determined by the first data are/is used as input value,
- means (128) for displaying the OTP on a display device (170) of the security token,
- means (128, 166) for determining updated first data with the aid of a function, and
- means (128) for replacing the first data by the updated first data in the electronic memory of the security token.

11. The security token according to claim 10, wherein the interface (164) of the security token is a contactless interface, in particular an NFC and/or RFID interface, which is used for communication with the terminal and to couple in electrical energy through the terminal, wherein the security token does not have its own energy supply.

12. The security token according to claim 10 or 11, wherein the security token comprises a counter or a deterministic random number generator for determining the updated first data.

13. A service computer system comprising means (154, 156) for providing a service for which an authentication is necessary, and comprising
- authentication means (184),
- means (152) for producing a network connection to a user computer system (194), which is designed to transmit an identifier and an OTP from the user computer system to the service computer system,
- database means (188), in which a version of first and second data are stored with the identifier as access key,
wherein the authentication comprises means (168, 186) for cryptographically deriving a further OTP with the aid of the version of the first and second data read from the database, wherein the means for cryptographically deriving the further OTP comprise a keyed hash function, in which the second data are used as a secret key for encrypting a hash value calculated from an input value of the keyed hash function, wherein the first data, a value derived from the first data, or a value determined by the first data are/is used as input value, and the authentication means is designed to check whether the OTP received via the network connection matches the further OTP and to generate an authentication signal if such a match is present, and to determine updated first data with the aid of a function (166, 186), and to store the updated first data in the database if the OTP and the further OTP match.

14. A computer system comprising a service computer system according to claim 13, a user computer system (100), a terminal (172), and a security token (106) according to any one of claims 1 to 12.

15. The computer system according to claim 14, wherein the terminal is formed by a smartphone with NFC and/or RFID interface.

## Revendications

1. Procédé de création d'un mot de passe à usage unique par un jeton de sécurité (106) pour l'authentification vis-à-vis d'un module d'authentification (184), dans lequel le jeton de sécurité présente une mémoire électronique (118) à laquelle aucun accès direct n'est possible par le biais d'une interface (164) du jeton de sécurité (106), mais uniquement un processeur (128) du jeton de sécurité peut effectuer un accès de stockage, dans lequel des premières (160) et des deuxièmes (162) données sont stockées dans la mémoire électronique, et dans lequel une version des premières données et des deuxièmes données est stockée de manière complémentaire dans une banque de données (188), avec les étapes suivantes :
- de couplage d'énergie électrique pour l'alimentation en énergie du jeton de sécurité par un terminal (172),
- d'envoi d'une commande (182) pour la création du mot de passe à usage unique par le terminal au jeton de sécurité,
- de dérivation cryptographique (168) du mot de passe à usage unique à partir des premières et deuxièmes données qui sont stockées dans la mémoire électronique, par le jeton de sécurité, où la dérivation cryptographique du mot de passe à usage unique a lieu par une fonction de hachage avec une clé, où les deuxième données sont employées en tant que clé privée pour le cryptage d'une valeur de hachage calculée à partir d'une valeur d'entrée de la fonction de hachage avec une clé, où les premières données, une valeur dérivée des premières données ou une valeur déterminée par les premières données sont employées en tant que valeurs d'entrée,
- d'affichage du mot de passe à usage unique sur un dispositif d'affichage (170) du jeton de sécurité,
- de détermination de premières données actualisées à l'aide d'une fonction (166) par le jeton de sécurité,
- de remplacement des premières données par les premières données actualisées dans la mémoire électronique par le jeton de sécurité, les deuxièmes données restant inchangées,
- d'établissement d'une connexion en réseau entre un système informatique d'utilisateur (100) et le module d'authentification,
- d'entrée du mot de passe à usage unique dans le système informatique d'utilisateur,
- de transmission d'un identificateur et du mot de passe à usage unique du système informatique d'utilisateur au module d'authentification par le biais de la connexion en réseau,
- d'accès du module d'authentification à la banque de données (188) avec l'identificateur en tant que clé d'accès pour la lecture de la version des premières et deuxièmes données stockée dans la banque de données,
- de dérivation cryptographique (168, 186) d'un nouveau mot de passe à usage unique par le module d'authentification avec la version des premières et deuxièmes données lues dans la banque de données,
- de vérification par le module d'authentification si le mot de passe à usage unique et le nouveau mot de passe à usage unique coïncident, et si c'est le cas, de création d'un signal d'authentification, de détermination de premières données actualisées à l'aide de la fonction par le module d'authentification, de stockage des premières données actualisées dans la banque de données en tant que version actuelle des premières données à condition que le mot de passe à usage unique et le nouveau mot de passe à usage unique coïncident.

2. Procédé selon la revendication 1, dans lequel la dérivation cryptographique du mot de passe à usage unique par le jeton de sécurité et par le module d'authentification a lieu respectivement après la détermination des premières données actualisées à l'aide de la fonction, de sorte que la dérivation cryptographique a lieu à partir des premières et des deuxièmes données ou des premières données actualisées et des deuxièmes données, et/ou dans lequel l'affichage du mot de passe à usage unique sur le dispositif d'affichage du jeton de sécurité a lieu avant ou après l'actualisation des premières données par le jeton de sécurité.

3. Procédé selon la revendication 1 ou la revendication 2, dans lequel le couplage de l'énergie électrique a lieu sans contact, notamment par un couplage électromagnétique, en particulier, selon un procédé NFC ou RFID.

4. Procédé selon l'une des revendications précédentes, dans lequel, dans le cas de la fonction de détermination des premières données actualisées, il s'agit d'un compteur qui est incrémenté ou décrémenté pour la détermination des premières données actualisées.

5. Procédé selon l'une des revendications précédentes 1 à 3, dans lequel, dans le cas de la fonction de détermination des premières données actualisées, il s'agit d'un générateur de nombres aléatoires déterministe qui est prévu pour la création d'une suite de N nombres aléatoires, où les premières données détermine un i^{ème} élément de la suite, où le i^{ème} élément de la suite prend part à la dérivation cryptographique du mot de passe à usage unique, respectivement à la dérivation cryptographique du nouveau mot de passe à usage unique.

6. Procédé selon l'une des revendications précédentes, dans lequel, dans le jeton de sécurité, il s'agit d'un document de valeur ou de sécurité, comme, par exemple, un document d'identité, c'est-à-dire un document d'ID, notamment une carte d'identité électronique, un passeport, un permis de conduire, une carte d'entreprise ou un moyen de paiement, comme, par exemple, un billet de banque, une carte de crédit ou un autre document d'autorisation, comme, par exemple, une carte d'entrée, un connaissement ou un visa, notamment une carte à puce ou une clé USB, en particulier avec une interface RFID et/ou NFC.

7. Procédé selon l'une des revendications précédentes, dans lequel, dans le cas du dispositif d'affichage du jeton de sécurité, il s'agit d'un dispositif d'affichage bistable, d'un affichage électrophorétique, d'un affichage électrochrome, d'un affichage à cristaux liquides (LCD), d'un affichage à DEL, notamment d'un affichage à DEL inorganique ou organique (OLED), d'un affichage à élément rotatif, d'un affichage sous forme de bande, d'un affichage à effacement de photoluminescence ou d'un affichage basé sur l'effet d'électro-mouillage ou d'un affichage hybride.

8. Procédé selon l'une des revendications précédentes, dans lequel les nouvelles étapes suivantes sont exécutées par le module d'authentification si aucune concordance du mot de passe à usage unique et du nouveau mot de passe à usage unique n'est constatée :
- la transmission de premières données actualisées à l'aide de la fonction par le module d'authentification,
- une nouvelle dérivation cryptographique du nouveau mot de passe à usage unique par le module d'authentification avec les deuxièmes données et les premières données actualisées,
- une nouvelle vérification si une concordance entre le mot de passe à usage unique reçu par la connexion en réseau et le nouveau mot de passe à usage unique est présente, et si ce n'est pas le cas, une exécution répétée des dites étapes jusqu'à ce qu'une concordance se présente ou qu'une condition d'interruption se trouve atteinte.

9. Procédé selon la revendication 8, dans lequel, dans le cas de la condition d'interruption, il s'agit d'un nombre maximal prédéfini de répétitions ou d'une durée.

10. Jeton de sécurité pour la création d'un mot de passe à usage unique doté
- de moyens (164) pour le couplage d'énergie électrique pour l'alimentation en énergie du jeton de sécurité par un terminal (172),
- de moyens (164) de réception d'une commande (182) pour la création du mot de passe à usage unique par le terminal,
- de moyens (168) de dérivation cryptographique du mot de passe à usage unique à l'aide de premières (160) et de deuxièmes (162) données stockées par une mémoire électronique du jeton de sécurité, où les moyens de dérivation cryptographique présentent une fonction de hachage avec clé dans laquelle les deuxièmes données sont employées en tant que clé privée pour l'encryptage d'une valeur de hachage calculée à partir d'une valeur d'entrée de la fonction de hachage à clé, où les premières données sont employées en tant que valeur de départ d'une valeur dérivée des premières données ou une valeur déterminée par les premières données,
- de moyens (128) d'affichage du mot de passe à usage unique sur un dispositif d'affichage (170) du jeton de sécurité,
- de moyens (128, 166) de détermination de premières données actualisées à l'aide d'une fonction, et
- de moyens (128) de remplacement des premières données par les premières données actualisées dans la mémoire électronique du jeton de sécurité.

11. Jeton de sécurité selon la revendication 10, dans lequel l'interface (164) du jeton de sécurité est une interface sans contact, notamment une interface NFC ou RFID, laquelle sert à la communication avec le terminal et pour le couplage de l'énergie électrique par le terminal, où le jeton de sécurité ne dispose d'aucune alimentation en énergie propre.

12. Jeton de sécurité selon la revendication 10 ou la revendication 11, où le jeton de sécurité présente un compteur ou un générateur de nombres aléatoires déterministes pour la détermination des premières données actualisées.

13. Système informatique de service doté de moyens (154, 156) pour la fourniture d'un service pour lequel une authentification est nécessaire et doté
- de moyens d'authentification (184),
- de moyens (152) d'établissement d'une connexion en réseau avec un système informatique d'utilisateur (194), laquelle connexion est conçue pour la transmission d'un identificateur et d'un mot de passe à usage unique du système informatique d'utilisateur vers le système informatique de service,
- de moyens en banque de données (188), dans laquelle une version des premières et des deuxièmes données est stockée avec l'identificateur servant de clé d'accès,
dans lequel les moyens d'authentification présentent des moyens (168, 186) de dérivation cryptographique d'un nouveau mot de passe à usage unique à l'aide de la version des premières et deuxièmes données lue à partir de la banque de données, où les moyens de dérivation cryptographique du nouveau mot de passe à usage unique présentent une fonction de hachage à clé chez laquelle les deuxièmes données sont employées en tant que clé privée pour l'encryptage d'une valeur de hachage calculée à partir d'une valeur d'entrée de la fonction de hachage à clé, où les premières données, une valeur dérivée des premières données, ou une valeur déterminée par les premières données sont employées en tant que valeur d'entrée, et les moyens d'authentification sont conçus pour vérifier la concordance du mot de passe à usage unique reçu par le biais de la connexion en réseau et du nouveau mot de passe à usage unique, et générer un signal d'authentification lorsqu'une telle concordance est présente, ainsi que pour la détermination de premières données actualisées à l'aide d'une fonction (166, 186) ainsi que pour le stockage des premières données actualisées dans la banque de données s'il y a une concordance du mot de passe à usage unique et de l'autre mot de passe à usage unique.

14. Système informatique doté d'un système informatique de service selon la revendication 13, d'un système informatique d'utilisateur (100), d'un terminal (172) et d'un jeton de sécurité (106) selon l'une des revendications 1 à 12.

15. Système informatique selon la revendication 14, dans lequel le terminal est formé par un Smartphone avec une interface NFC et/ou RFID.
